# EUROPEAN PATENT SPECIFICATION

(11) **EP 1 623 110 B1**
(45) Date of publication and mention of the grant of the patent: **21.05.2008**
(21) Application number: 04728362.7
(22) Date of filing: 20.04.2004
(51) Int. Cl.: F03B 13/18

(54) **PRODUCTION INSTALLATION**
PRODUKTIONSANLAGE
INSTALLATION DE PRODUCTION

(30) Priority: 25.04.2003 FI 20030635
(43) Date of publication of application: 08.02.2006
(73) Proprietor: AW-Energy Oy, 00560 Helsinki (FI)
(72) Inventor: KOIVUSAARI, Rauno, FIN-02400 Helsinki (FI); TUOKKOLA, Yrjö, FIN-00650 Helsinki (FI); JÄRVINEN, Arvo HF, FIN-01230 Vantaa (FI); LILJELUND, John, FIN-02210 Espoo (FI); HÖYDEN, Antti, FIN-00140 Helsinki (FI); LAINEMA, Matti, FIN-00370 Helsinki (FI)
(74) Representative: Tanhua, Pekka Vilhelm
(86) International application number: PCT/FI2004/000240
(87) International publication number: WO 2004/097212

(56) References cited:
- US-A- 4 001 597

## Description

The invention relates to a production installation as defined in the preamble of claim 1 for utilising wave energy.

When the wind is blowing in the same direction over a long period of time, waves are formed. In deep water, waves generated under the effect of the wind have a given predominating, i.e. average wavelength L and a height, which both depend on the wind force and on the period over which the wind is blowing. As a wave is proceeding towards shallower water, its wavelength shortens and the wave height increases due to the effect of the water bottom on the waves. As the wave has reached a sufficient height in the specific water depth which depends on the wavelength, the wave will break. This depth at which a wave breaks is called "breaker line" in literature. It should be noted that the wave breaking line is not constant, but depends to some extent on the wavelength and height which, in turn, depend on wind conditions. The breaker line is usually between 1/4 to 1/5 of the prevailing wavelength L. The wave breaking line remains mainly the same at a specific location on the sea coast, because the prevailing wind conditions mostly remain basically constant.

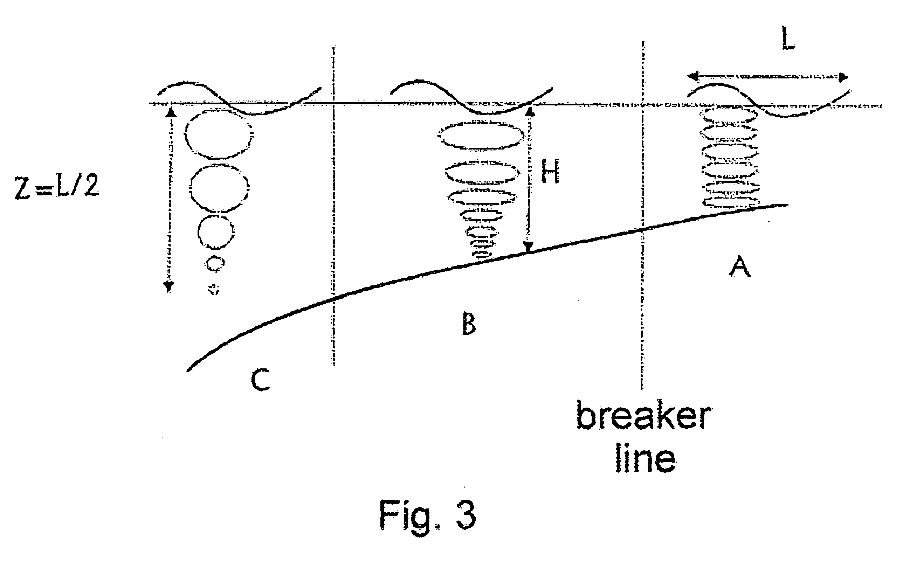

Figure 3 illustrates the effect of a wave on the water mass in a water basin, such as the sea near the coast. The wave action depth Z depends on its wavelength so that a wave having a wavelength L still acts at a depth L/2. In the area C in figure 3, i.e. in deep water, the orbit of each point of the water mass is circular. The ratio of the water depth H to the wavelength L of the waves is great, i.e. the ratio H/L is in the range 1/2-∞. As the wave proceeds towards shallower water, its height increases and the wavelength decreases, so that the ratio of the water depth to the wavelength decreases. In intermediate water, in area B of figure 3, the water depth H is about 1/2 to 1/20 of the prevailing wavelength L. The water mass has a circular movement in surface water, however, while proceeding towards the bottom of the water basin, the trajectory of each point in the water mass becomes first elliptic, and proceeding further in depth, the elliptic shape of the point trajectory increases, and eventually, near the bottom of the water basin, each point in the water mass has a trajectory following roughly a back-and-forth movement around a given centre. In shallow water, i.e. in coastal area A in figure 3, the ratio of the water depth H to the prevailing wavelength L is between 0 to 1/20, in conditions where said breaker line is at a water depth of 1/4 to 1/5. In shallow water, the wave action goes all the way to the bottom, while the water mass has an elliptic movement.

Various systems and power plants have been developed for recovery of the kinetic energy of waves. Usually they are based on bodies floating on the water surface and moved by the waves. The kinetic energy of bodies floating on the surface is recovered, in one way or the other, into generators or torsion pumps located either on or under the water surface, from where energy can be further transferred to the objects of application.

The main problem caused by know systems for recovery of wave energy of the type described above relates to their location; in rough sea, structures on the surface are constantly exposed to damage. Due to the risk of damage, power plants utilizing wave energy built so far have relatively low power.

There are also known systems for recovery of the kinetic energy from the waves, which are anchored to the bottom of a water basin, such as a lake or the sea. One such system is represented by the device disclosed by PCT Patent Application 98/17911, which device is attached to the bottom of the water basin and where wave energy is recovered from a plate, which is attached to the water bottom and oscillated by the waves. The plate reaches partly the water surface. The device is mounted in the area between the wave breaking line and shallow water, on the bottom of the water basin. The problem with this device is its position at the wave breaker line, where the wave movement and hence the energy available is random whereby the device is inappropriate for continuous energy generation. The plate is partly above the surface level, so that the device is exposed to damage in rough sea. US patent specification 4,001,597 also describes a system for recovery of wave energy, whose pumping unit is anchored to the sea bottom. The pumping unit is located in shallow water region and the pressure plate reaches the surface or remains slightly under it. This system also involves the problem of the position of the pressure plate: even though the plate might be under the water surface under calm conditions, it will be at least partly on the surface in rough sea, and the system is consequently exposed to damage. The position of the system also causes a second problem: the movement of the waves in shallow water is too irregular to achieve steady energy generation.

The invention is intended to eliminate the prior art disadvantages.

Thus, the first chief objective of the invention is to provide a production installation for recovering kinetic energy bound in waves with high efficiency and as evenly as possible, regardless of wind conditions. This means that the device is built in such a way that it aims at optimally minimizing the wave energy variations caused by prevailing weather conditions above water surface.

The second chief objective of the invention is to provide a production installation for recovering kinetic energy of waves which is minimally exposed to damage caused by weather conditions.

The third chief objective of the invention is to build a production installation for recovering kinetic energy of waves which has a structure that allows expansion by adding single units into it and repair of the installation is made simple by replacing single units in it.

The invention is based on the surprising observation that under the surface, close to the bottom, in intermediate water depth, the waves have nearly equal, and in some cases even greater energy than the water surface waves. This energy mainly occurs as kinetic energy. The invention utilises this kinetic energy.

As shown in figure 3, a given point in the water mass in shallow water has an elliptic or circular movement, in other words, it has both potential and kinetic energy. Many present day wave power plants are devised to operate in the area mentioned above, between the wave breaking line and shallow water A, because the waves have maximum potential energy in this area owing to their height, and most systems aim at utilising this potential energy in one way or another. However, utilising wave energy in shallow water is notably difficult, especially considering that structures in shallow water are necessarily very close to the surface, where they are readily exposed to rough weather conditions. Moreover, the water mass movement in shallow water is more or less rotating (elliptic), as shown in figure 3 and there are always crossing waves to some extent, which makes the energy generation irregular.

By contrast, the invention is based on the feature of the water mass movement being adapted to actuate production installation units or their parts attached to the bottom of the water basin in area B, i.e. in the intermediate water region in figure 3. The production installation is totally submerged, preferably at such a depth where the water mass movement is primarily reciprocating or has a regularly elliptic shape.

The invention relates to a production installation as defined in claim 1 for utilising wave energy in which arrangement there are two or more production units and the water mass of the water basin is adapted to actuate a part of a production unit attached to the water basin bottom or close to it, and the production units aim at transforming the kinetic energy of the water mass into some other form of energy such as electricity and/or kinetic energy and/or pressure of the intermediate substance. The production units are attached directly or indirectly to the bottom of the water basin in intermediate water region (B), the production units are totally submerged below water surface and the transferring equipment of energy or of the intermediate substance have been connected in parallel or series arrangement in relation to each other.

This type of production installation achieves a number of major advantages:
- In the intermediate water region, the movement of a given point in the water mass is substantially reciprocating near the water bottom, the water mass having then mainly but kinetic energy. Thus the water mass energy remains constant, unlike in known wave power plants which are located in shallow water. The water mass has regular movement relative to a given centre, allowing a production installation anchored to the water bottom to generate energy more regularly than does a device located partly or entirely above the water surface.
- The production installation conforming to the invention used for energy generation in the intermediate water depth region is not readily damaged, because it is not exposed to weather conditions prevailing on the water surface, nor to the rotating movement of the water mass, as are energy generation systems in shallow water described above.
- At intermediate depth, the water mass actuated by waves at the bottom of the water basin frequently has almost equal kinetic energy, and sometimes even higher energy than the water mass actuated by waves in shallow water. This is due to the fact that there are always some cross-waves in shallow water waves caused by obstacles at the water bottom. In this situation, a production installation located entirely under the water surface on the bottom of a water basin at intermediate depth, recovers almost the same amount of energy from the waves as does a wave power plant operating in shallow water partly above the water. For the reasons given above, a wave power plant operating under water can be constructed in larger size and with higher efficiency than a wave power plant operating above water.

In one preferable application of the invention the units of the wave power plant are attached to the bottom of the water basin so that they are totally submerged at a depth where the movement of the water mass is substantially reciprocating or elliptic. Even more preferably, the units are located at a depth where the movement of the water mass is substantially reciprocating and the energy of the water mass remains substantially constant. Benefits of the disposition of the power plant have been highlighted earlier in the text.

In another preferred application of the invention all the transferring equipment (piping or wiring) of energy or intermediate substance used in the power plant have been permanently attached to the base and the base has ready locking device for the production units which are to be connected to them. This brings along the benefit that the wave energy plant can easily be expanded and furthermore, damaged units can be easily replaced.

In this context we wish to point out that the definition "production unit attached to the bottom of a water basin" refers both to a direct method of attaching the unit to the bottom with the aid of e.g. fastening brackets as well as indirect attaching of the unit to the bottom with the aid of e.g. a separate base, which in turn is anchored to the bottom. A water basin is a lake, the sea or similar.

With the help of the wave energy plant conforming to the invention it is possible to transform the kinetic energy of the water mass directly to electricity, or it can be utilised for the transferring of the intermediate substance like fresh water or sea water into an application situated on the surface.

The invention is described in greater detail below with reference to the accompanying drawings.

Figure 1A shows a perspective picture of one embodiment of a production installation unit conforming to the invention which utilises the wave plate with an attached torsion pump with two chamber pipes for the transformation of energy.

Figure 1B shows a cross section of the torsion pump in figure 1A.

Figure 1C shows a perspective picture of another application of a production installation unit conforming to the invention which utilises the wave plate with an attached torsion pump with one chamber pipe for the transformation of energy.

Figure 1D shows a vertical section of the torsion pump in figure 1C from the point of liquid inlet from direction 1D.

Figure 1E shows a cross section of the torsion pump in figure 1C from the point of the bracket from direction 1E.

Figures 2A and 2B present some other alternative arrangements of production installation units conforming to the invention; these are also shown from the side view. Figure 2A represents a vertical axis rotor installed on sea bottom. Figure 2B shows correspondingly a horizontal axis rotor model.

Figure 3 illustrates the effect of waves in a water basin.

Figure 4 represents a power plant which is suited for recovering wave energy.

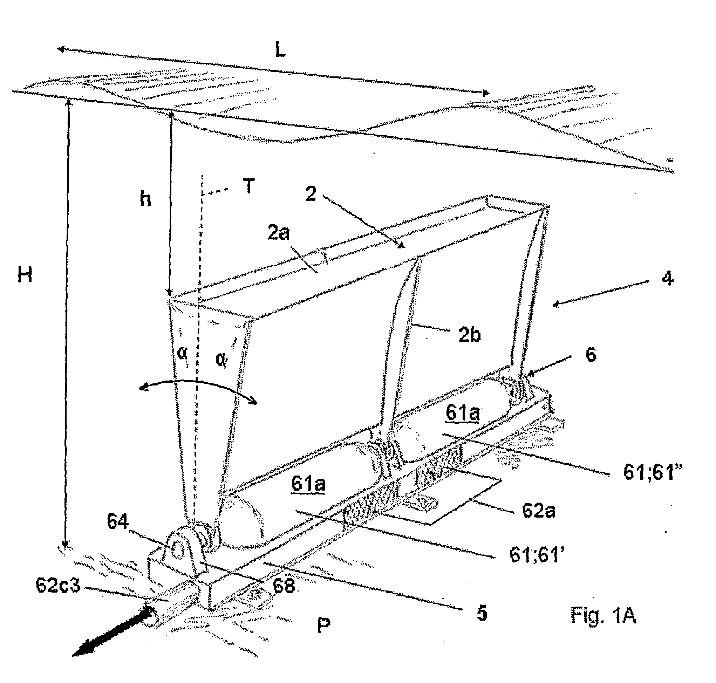

The main parts of the unit 4 in figure 1A are the so-called wave plate 2 pivotally attached to a base 5 situated at the bottom, and the so-called torsion pump 6 connected to the bottom part of the plate. The torsion pump 6 has two pipes, i.e. it has two similar chamber pipes 61 whose action is based on a winding shaft 64 passing through the chamber pipes while the frame 61a of the chamber pipe 61 stays immobile.

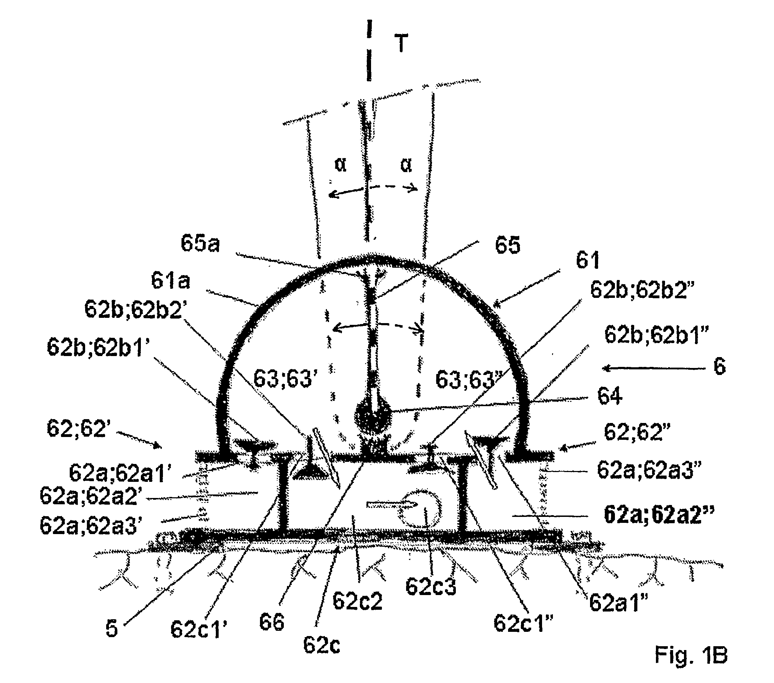

Figure 1B shows a cross section of the torsion pump 6 of figure 1A clarifying the operating principle and structure of the pump.

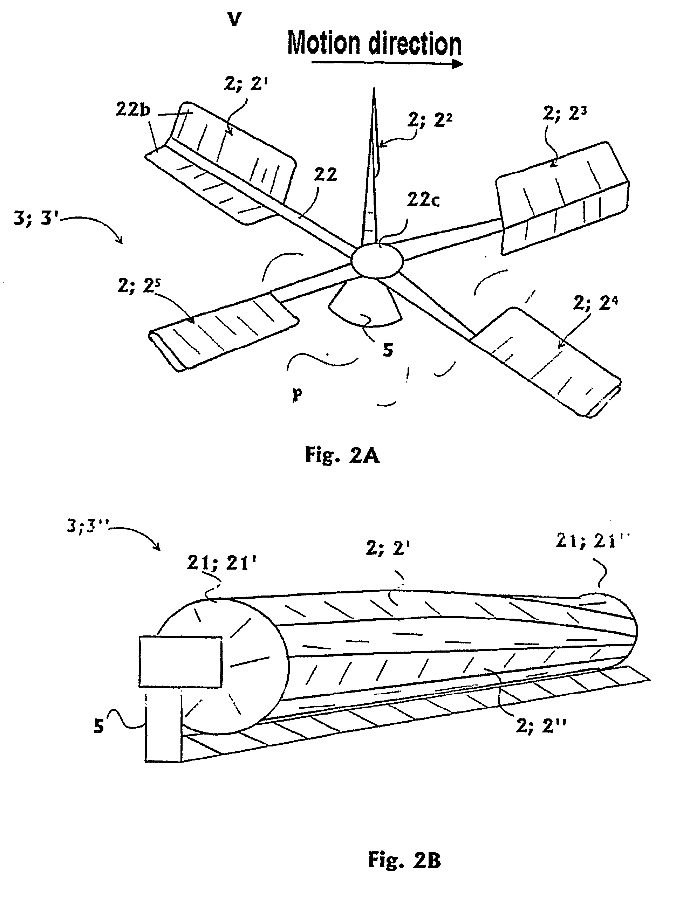

In figure 2A is shown a production installation which is a vertical axis rotor 3; 3' installed in a vertical position on the sea bottom, with a central axis (revolving axis) 22c which has several projecting rotor wings 2. Each rotor wing 2 has an arm 22, which has a winding two-part blade 22b at the outmost end as seen from the vertical axis.

Figure 2B correspondingly shows a production installation which is a horizontal axis rotor 3; 3" installed on sea bottom. The horizontal rotating axis is attached with its end flanges with a hinged joint to the base 5 installed on sea bottom. Around the horizontal rotating axis of the rotor there are spiral winding wings 2, which are attached to the end flanges 21.

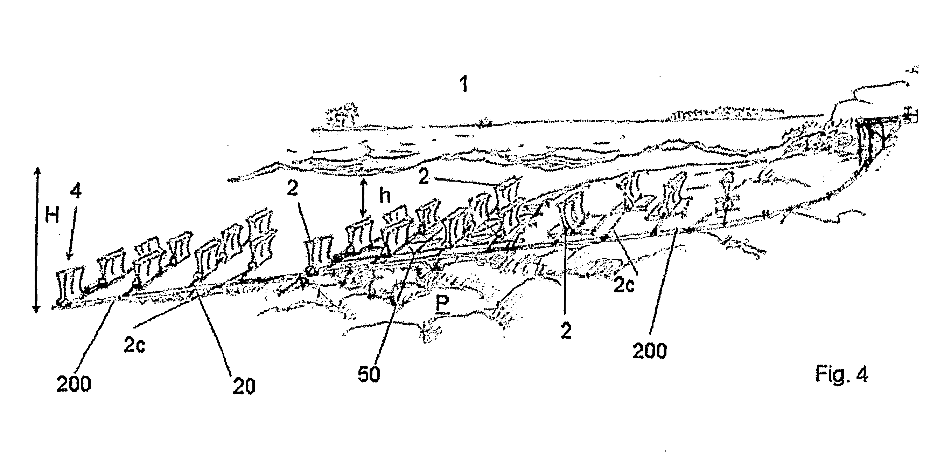

In figure 4 is shown a principal solution of a device 1 for the production of energy, liquid or gas comprising several production units. The units 4 are totally immersed below water surface in the intermediate water region and they are all attached to the common base 50. The units 4 have been connected in parallel or series arrangement in relation to each other.

The production units and installations of energy and/or intermediate substance illustrated in figures 1A - 1E and 2A - 2B as well as 4 will be described in further detail below. The disposition of the production units at the water bottom is illustrated in figure 3, which is referred to above in the general part of the invention explaining level of technology and the differences in relation to the invention.

The production unit 4 shown in figure 1A, which is used to convert wave energy into kinetic energy or pressure of water which is transferred further by means of main or transfer piping, has a box-like housing or base 5 attached at intermediate water depth to the bottom P of the water basin. The bottom P of the water basin is at a distance H from the water surface. In the wind conditions prevailing in this coastal area, the waves have a wavelength L, the ratio of the water depth H to the prevailing wavelength is in the range of 1/2 to 1/20, i.e. in area B (intermediate water depth) in figure 3. The energy-generating parts of the production unit 4, i.e. the wave plate 2 and the torsion pump 6 connected to it, are entirely mounted under the surface, at a depth h, where the movement of the water mass generated by the waves is still mainly reciprocating. The action depth of the waves is about half of their wavelength L. A plate-like body 2, so-called wave plate, is attached to the pivoting shaft 64 of the torsion pump in such a way that while the wave plate rotates around vertical plane T, also the shaft 64 rotates around the same vertical plane T exactly as much. Shaft 64 is attached with a hinged joint into the fastening ring 68 which is integrally mounted at the base 5. The plate-like body has a length of approximately 1/3 of the prevailing wavelength L. The torsion pump 6 which is situated at the bottom part of the body, rests on the box-like base (housing) 5 by means of the straight back plates of each chamber pipe 61 frame 61 a which is otherwise cylindrical except flattened at the lower end. The back plate is generally integrated with the said base. The wave plate 2 is concave to inside. Between the lugs 2b and the horizontally placed top plate 2a of the wave plate 2 pockets are formed which form a flow obstacle to the water mass, whereby the water mass moves the wave plate 2 more effectively.

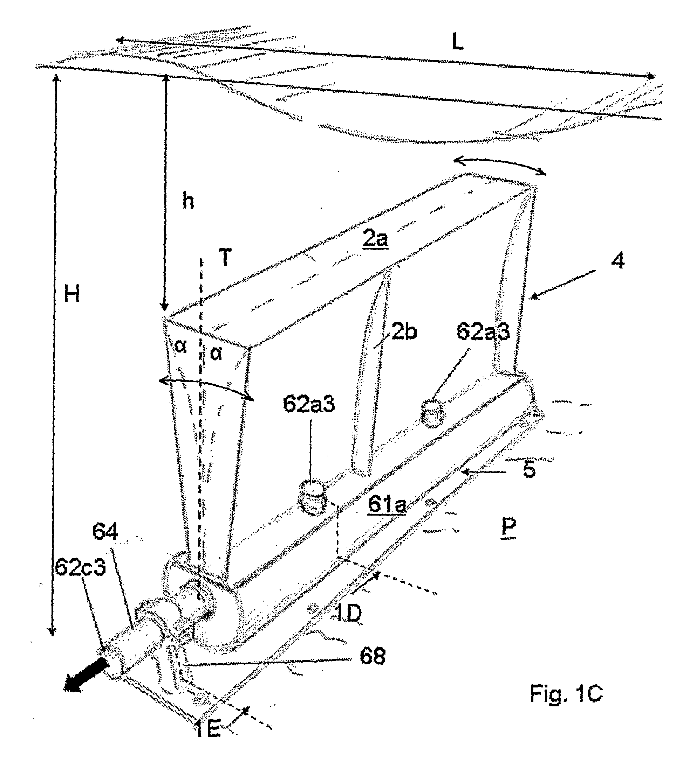

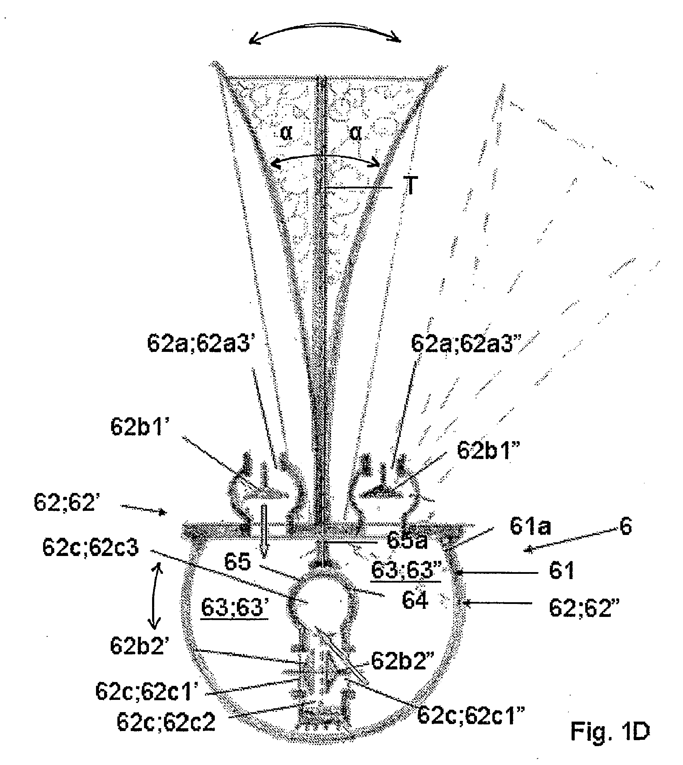

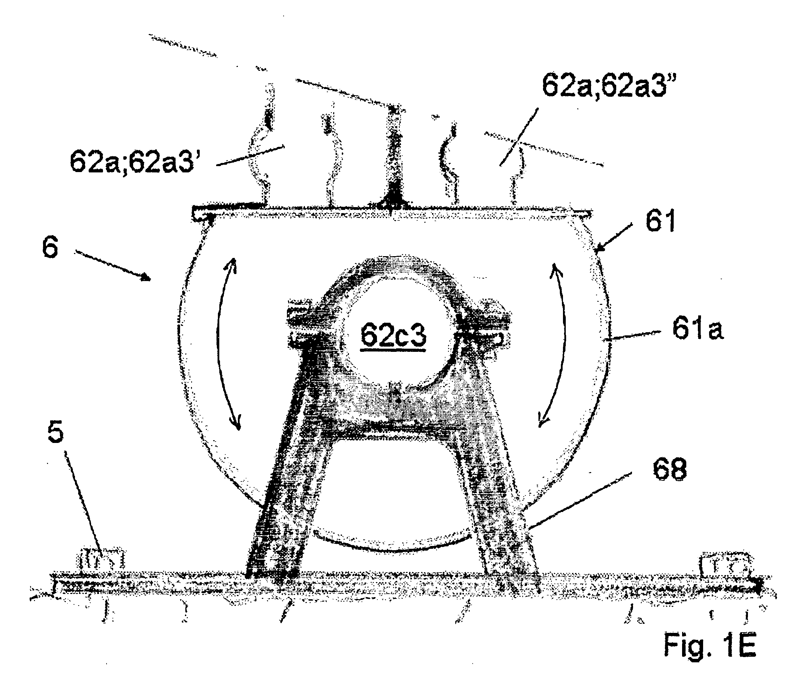

Figure 1B illustrates with more detail the structure of the torsion pump 6 in figure 1A. As has been stated before, the frame (outer wall) 61a of each chamber pipe 61 of the torsion pump has been immovably mounted on the box-like base 5. The wave plate 2 is fastened to a shaft 64, rotating in fastening rings 68 (illustrated in figure 1) mounted on the box-like base 5. A plate-like baffle plate 65 is integrally connected with the shaft 64 and this plate runs inside the chamber pipe 81 of the torsion pump the total length of the chamber 63 marked off by the frame 61a and the box-like base 5 and is basically as long as the frame 61a of the pump. The plane running through the baffle plate is usually parallel with the wave plate. The baffle plate 65 divides the chamber 63 of the torsion pump defined by the frame 61 a, which is integrated with the base, and the base 5 into two generally equally big parts, i.e. into first chamber part 63' and into second chamber part 63". The baffle plate is equipped with a glide jointing 65a running the whole length, as well as at the ends thus preventing the liquid (or pressure) from moving from first chamber part into second chamber part from between the frame 61 a and the baffle plate 65. There is a jointing 66 between the shaft 64 and the box-like housing 5 attached to the base or bottom which aims at preventing the intermediate substance and pressure inside the chamber parts 63' and 63" from interflowing to each other as the shaft 64 and the baffle plate 65 attached to it rotate with the wave plate 2. In the liquid transfer piping 62; 62','62" of both chamber pipes 61 of the torsion pump 6, both chamber parts have a joint outflow piping 62c, separate incoming piping 62a; 62a', 62a" and set of valves 62b; 62b', 62b" which regulate the transfer of liquid. The incoming piping 62a; 62a', 62a" has gridded inlets 62a3; 62a3', 62a3", located on the side of the box-like base 5. The inlets 62a3 of one side of the torsion pump can be seen in figure 1A. Further parts of incoming liquid piping 62a; 62a' and 62a; 62a" of the chamber parts 63' and 63" are the antechambers 62a2, 62a2', and 62a2; 62a2" situated inside the box structure of the base 5 and the chamber openings 62a1; 62a1', 62a1" leading into the chambers 63; 63', 63" which are equipped with incoming valves 62b; 62b1', 62b" regulating the flow of incoming liquid (or gas). The liquid outflow chamber 62c; 62c2 runs inside the frame structure of the base 5 and it is common for both chamber pipes 61; 61', 61". The outflow chamber 62c2 continues as the outflow pipe 62c3 which can also be seen in figure 1A. There are outflow valves 62b; 62b2' and 62; 62b" between the outflow chamber 62c2 and the chamber parts 63' and 63" regulating the flow of liquid (gas) from corresponding chamber parts through the chamber part outlets 62c1; 62c1' and 62c1; 62c1".

We will inspect the movement of the plate-like body 2 of the production unit illustrated in figures 1A and 1B actuated by water mass movement. As has been mentioned earlier, the movement of water mass in depth H-h where the production unit has been installed is mainly reciprocating. Thus the points in the water mass circulate around a given centre. As the wave plate rotates, due to the reciprocating movement of the water mass, around its hinged joint, i.e. the shaft 64, all of the points on the plate 2 will then rotate, under the reciprocating movement of the water mass, over a given angle α around the vertical plane T along the curved trajectory indicated by the double-ended arrow with a full head. The plate 2 is attached roughly at its centre to the shaft 64 of the two-chamber torsion pump which is fitted with a turning bearing whereby the hinged joint of the plate is the same as the hinged joint of the shaft. As the points on the wave plate 2 rotate under the reciprocating movement of the water mass around the hinged joint along a certain angle α from left to right around the vertical plane T and back to left, the shaft 64 of the torsion pump, in turn, moves at exactly the same pace in the chamber 63 located inside the immovable frame 61a. The baffle plate 65 attached to the shaft rotates in pace with the shaft 64 along a certain angle α around the vertical plane T. As the baffle plate rotates along with the shaft, the volumetric capacity of chambers 63' and 63" changes whereby in the one chamber positive pressure is formed and negative pressure in the other. Liquid (e.g. water) or gas is transferred through the outlet valve 62b2' or 62b" of the pressurized chamber through the outlet opening 62c1' or 62c1" into the outlet chamber 62c2 and further to the outlet pipe 62c3. At the same time, liquid or gas (water) is flowing into the underpressurized chamber through the inlet opening 62a3' or 62a3" via the inlet valves 62b1' or 62b1" of inlet piping 62a' or 62a".

Figures 1C to 1E illustrate a production unit 4 which is particularly suited for the generation of liquid or gas. The production unit 4 has a torsion pump equipped with one chamber pipe 61 which is attached to a similar wave plate 2 as the torsion pump in figure 1A. The changes of volumetric capacity and pressure inside the chamber pipe 61 are in this embodiment, however, based on the rotating movement of the chamber pipe frame 61 a, which is otherwise cylindrical but has a flat top part, along with the wave plate 2 while the shaft 64 stays immobile. The chamber pipe 61 of the torsion pump 6 is connected directly by its frame 61 a to the lower part of wave plate 2 in accordance with figure 1C. Through the chamber pipe runs the shaft 64 which, in turn, has an outlet pipe 62c3 running through it. The shaft 64 is installed immobile into the fastening rings which are mounted into the base 5 so that the shaft 64 cannot turn. The inlet openings 62a3 of liquid are now placed on the straight back plate of the chamber plate frame 61 a which is a semicircle when seen in cross section. The frame 61 a is attached with the back plate into the lower end of wave plate 2.

In the cross section figure 1D of the torsion pump 6 taken from the viewpoint of the inlet opening 62a3, the inside organization of the torsion pump is better visible. Chamber 63 is again placed inside the chamber pipe 61 frame 61a, in the space confined by the inner walls of chamber pipe frame 61a. The baffle plate 65 divides the chamber 63, situated between the torsion pump frame 61a and the base 5, into two generally roughly equally big compartments, i.e. into first chamber part 63' and into second chamber part 63". The baffle plate 65 is in this embodiment formed by a valve box attached to the inner wall of frame 61 a which causes for the baffle plate 65 to rotate around the shaft 64 as the frame 61 a rotates around shaft 64. The plane which is parallel with the baffle plate is generally parallel with a plane parallel with the wave plate 2. There is again a glide jointing 65a between the baffle plate 65 and the curved part of the frame 61 a, whose structure and functioning is similar to that of a two-part torsion pump in figures 1A - 1B. The liquid transfer piping 62 of both chamber parts 63' and 63" of the torsion pump 6 again have a joint outflow piping 62c, incoming piping 62a; 62a', 62a" and set of valves 62b; 62b', 62b" which regulate the transfer of liquid. Now the incoming piping have (liquid) inlet openings 62a3', 62a3" which lead to corresponding parts 63' and 63" of chamber 63. The inlet openings are equipped with inlet valves 62b; 62b1' and 62b; 62b1" which regulate the flow of liquid (or gas) into chamber parts 63' and 63". In figure 1C are seen the inlet openings 62a3 of the other part 63" of the chamber 63 of the torsion pump. The liquid is transferred into the outlet chamber 62c; 62c2 which runs inside the baffle plate 65 attached to the shaft 64, and further to the outlet pipe 62c3 through the action of the outlet valves 62b2' and 62b" situated at the mouth of openings 62c1' and 62c1" in the baffle plate. The valves regulate the flow of liquid (gas) leaving the chamber parts.

Figure 1E illustrates how the shaft 64 and the outlet pipe 62c3 running inside it, are fixedly mounted on the base 5 with a lug 68. The frame 61 a of the chamber pipe 61 of the torsion pump 6, rotates around the shaft 64 while the wave plate, which is attached to the frame, turns.

As the wave plate 2 rotates along a certain angle α around the vertical plane T running through axis 2, the wall of the chamber pipe 61, which is attached to the wave plate, rotates equally much around the said vertical plane. The volumetric capacity of chamber parts 63' and 63" changes whereby in the one chamber part negative pressure is formed and positive pressure in the other. Liquid (or gas) flows from the pressurized chamber part through the outlet valve 62b2' or 62b" into the outlet chamber 62c2 situated inside the baffle plate and further to the outlet pipe 62c3. At the same time, in the other chamber part, negative pressure is formed due to the increase of volumetric capacity whereby water flows in through the inlet opening 62a3' or 62a3" through the action of inlet valves 62b1' or 62b 1".

Water coming from the outlet pipe 62c3 of the production installation 4 in figures 1A - 1E can be transferred into suitable applications. Preferably water can be transferred into a bigger transfer or main piping system which collects water from several production units and then transfers water from the main pipes to the point of application. The combining of several production units is later described with the help of figure 4.

Water can be transferred from the outlet pipes or transfer or main pipes to different types of pools from where it can be further transferred to be used for watering, drinking or washing water or to, e.g. swimming pools. Water can also be used for the purpose of inducing currents in another closed water basin or at one part of an open water basin, e.g. in the cultivation of water creatures (a.o. common mussels, rainbow trout etc.), or of water plants (a.o. rice), in the keeping open of harbours whereby a water current is induced at the bottom of a water basin to keep the shipping routes open or to clean them. Other similar points of application are the water glides by water pools, pumping of sewage water or recycling of polluted coastal water for cleaning. If the pumped water is first led to a pressure accumulator where even water pressure is created, it can be transferred from there pressurized into suitable applications, like applications of ornamental water torrents (water fountains, manmade streams and waterfalls), and it can also be used in fire fighting systems.

If instead of water, air is led from the surface to the torsion pump 6 used in the production unit in accordance with figure 1A or 1C by means of inlet pipes 62a3, pressurized gas or compressed air can be obtained from the pump. In order to produce pressurized air or other pressurized gas, gas is led to the chambers 63; 63' and 63; 63" by means of the inlet pipes, gas is then pressurized in said chambers due to the movement of the baffle plate, it is led through the outlet pipes 62c3 into the accumulator which levels out the pressure fluctuations of gas, and is then led to the point of application. Preferably gas is led into the accumulator from several production units coupled in series or parallel e.g. from the type of production units which are featured in the production installation in figure 4.

The point of application for the gas can be e.g. fish/vegetable pool, waterway whose oxygen level is being improved through aeration and pneumatics generally used in industry. Compressed air can also be used in the pressurized impregnation of wood or other materials a.o. or it can be used for developing boost pressure in machines and power plants. One important use of pressurized air is in air conditioning and/or ventilation of apartments for instance by means of separate air conditioning machine units. If water circulation is connected to this unit, it can also be used for cooling and/or heating of the process or apartment. The system can also be used for separating gases from each other or for production of hydrogen. The system also applies itself for the separating of salt or other substances from fresh or salt water.

In figures 2A and 2B are shown some production units designed primarily for the production of energy which can be used for the recovering of wave energy instead of the so-called wave plate used in figure 1A.

In figure 2A the axis 22c of the rotor 3; 3' of production unit 4 is pillowed to revolve in base 5 which in turn is attached to the bottom P. Rotor wings 2 are attached to the horizontal axis. Each rotor wing 2¹- 2⁵ has an arm 22, which has a two-part blade 22b winding around the arm 22 at the outmost end as seen from the vertical axis 22c. The parts of each two-part blade are hinged to the same side of the arm 22 of the wing 2. The wings 2 of the rotor 3; 3' rotate with the current of the water flow despite the direction of the current; negative pressure forms on the flow side of the two-part blade 22 which causes for the rotor to turn. This application of the rotor is well suited in relatively shallow water.

In figure 2B is in turn presented the rotor 3; 3" of a horizontal axis production unit 4 which is installed on sea bottom. There are several winding wings 2 which spiral around the horizontally installed rotating axis, of which winding wings 2' and 2" are shown in the figure. The rotating axis and the winding wings 2 are fastened to the end flanges 21; 21' and 21; 21" from their ends, which end flanges in turn are fastened revolvingly to the basis 5. As a modification of this rotor model the rotor axis can also be set vertically upright.

The production units featured in figures 2A and 2B are generally used for the production of energy; the energy of the rotating motion of the rotor is either converted with a generator connected to the rotor or the motion is mechanically transported to a generator on the surface. Preferably rotors are connected with wiring so that there are several in a parallel or series arrangement and they are used for energy production for instance in the way presented in figure 4.

In figure 4 is illustrated a production installation 1 of water or gas which is situated totally under the water surface of the water basin at the bottom P of the water basin in intermediate water (compare figure 3). The production units of energy and/or liquid or gas in the production installation 1 are placed in the depth H-h. The movement of water mass is in the depth H-h where the production installation units have been installed mainly reciprocating and thus the points in the water mass circulate around a given centre. The production installation 1 of figure 4 consists of several production units which are connected either in parallel or series arrangement. A typical production installation comprises several production units connected in parallel or series arrangement in relation to each other so that the arrangement can be changed in accordance with possibilities offered by prevailing circumstances.

The production units 4 of a production installation 1 in figure 4 transform wave energy into kinetic energy and pressure of liquid (water) in a wave energy utilizing production installation 1. The production units 4 are e.g. similar to those in figures 1A or 1C so that they have a wave plate 2 which, due to the movement of the water mass, rotates around its ball joint in a reciprocating movement and the kinetic energy of the wave plate is transformed into kinetic energy and pressure of the liquid by means of a torsion pump (or piston pump). The liquid is transmitted from the production unit first to an outlet piping 2c in each production unit and from the outlet piping either directly to a general main piping 200 (parallel arrangement) from where the liquid is transported either to the point of application or first to the transfer line 20 of liquid, where outlet piping of several production units are connected, and from the transfer line to a general main piping 200 (series arrangement) which is bigger in diameter. The diameter of the liquid transfer line 20 is mostly roughly the same as the diameter of outlet piping 2c of the production unit whereby it can be used to increase the level of pressure in the liquid. Instead of the torsion pump also other types of pumps can be used for converting the kinetic energy of the reciprocating movement of water mass to kinetic energy and pressure of the liquid.

The pressurized liquid is transferred from the outlet piping 2c of each production unit in parallel arrangement directly to a general main piping 200 from where it flows to the point of application. The point of application can also be a generator producing electric energy. As the production units are in parallel arrangement and liquid is pumped, the amount of pumped liquid is increased while the pressure remains constant. Parallel arrangement is suitable when the pressure level of the outflowing liquid in the main piping 200 cannot be increased due to circumstances, equipment or materials and high pressure is not needed. When the production units are in series arrangement, the outlet pipes of two or more production units are first connected in series to form the same liquid transfer line 20 and from the liquid transfer line the liquid is transferred into the main pipe 200. The series arrangement offers the possibility to increase the pressure level of liquid in the main piping when liquid is pumped. In series arrangement the pressure level of liquid/gas is increased while the amount of pumped liquid is constant. Due to high level of pressure the dissipation in connection with the amount of flow is diminished. Higher pressure is often easier to utilize.

The pumped liquid or gas from the production installation is led through main pipe (or pipes) to a turbine building where the liquid or gas spins the generator with the help of the turbine. The liquid or gas can also drive other work machines or the output or pressure produced by the liquid or gas can be utilized in some other way.

The production installation 1 can be placed on one or several bases 50 built of acid-proof steel comprising a grid where each grid square has ready-made instant locking device and piping (wiring) for each production unit. In figure 4 the piping of the production installation is integrated with the grid-form base 50 which is equipped with liquid main piping 200 and liquid transfer lines 20 together with outlet pipes 2c coming from individual production units to join the main piping. The basic construction of the base 50 of the production installation can be of concrete or some other building material which endures the conditions of the water area in question. One production installation can also have several separate bases. The founding of a base for a production unit on the bottom of a water area is made in the following way. Firstly, by looking for the most suitable place for the production equipment on the bottom of the water basin in intermediate water area. Founding work needs to be done for the base according to the profile of the bottom and the material to be used. The easiest alternative is to build a production installation on an even rock bottom which has a suitable angle of declivity. If the bottom is of sand or some other soft material and has a strongly alternating form, it may cause additional construction requirements to secure the base/bases of the production installation. The production installation comprises several units for the recovery of wave energy (production units), which are attached to the base/bases 50 of the production installation. The production units are preferably separately removable from the base/bases for maintenance and repair.

To a rock bottom the production installation bases are attached by bottom mooring fastened to the bed rock. In case of a soft bottom material, piles are driven to the bottom for the base. In water basin bottoms which comprise several different types of ground material, adequate constructional work has to be done to fasten the bases.

Above we have presented only some applications of production installations corresponding to the invention and for a technically informed reader it goes without saying that the invention can be realized in many alternative ways following the main idea of the invention presented in the claim.

Thus the production unit can be attached in the above described way either indirectly to the bottom by means of a base or similar foundation which, in turn, is attached to the bottom by means of suitable mooring (pls compare figure 4 e.g.) or it can also be attached directly to the water basin bottom with fastening lugs or similar. The torsion pump can also be replaced with e.g. the common piston pump used in hydraulics, where the reciprocating movement of the water mass is transferred through the action of a piston into the intermediate substance inside the piston pump cylinder.

A generator can also be connected directly to one or several production units whereby electric energy can be transferred from the production field via electric wires.

When using liquid or gas to run a turbine, preferred type of electricity can be produced for direct use or for delivery to the network.

The production installation can also be used directly to generate either direct or alternating current electricity. The utilization of electricity or further delivery to electrical network demands some processing. Due to the cyclic action of a wave energy unit, the electricity generated is more or less pulsing and diffuse in form also when used for direct current electricity. The evenness of electricity generation can be improved with e.g. a balancing wheel which is run by a production unit (or units). When processing the alternating current electricity for direct use or for delivery to the network, the alternating current mode is changed into direct current and after this it is again changed into alternating current for further delivery into the network. When processing the direct current electricity for direct use or for delivery to the network, the direct current electricity is first tidied up through direct current method and then it is changed into alternating current for delivery into the network. In small scale use electricity can be stored in accumulators for local use whereby the alternating current electricity is changed into direct current and the direct current is tidied up and adjusted for the accumulators.

## Claims

1. A production installation (1) for utilizing wave energy in which production installation there are two or more production units (4) and the water mass (V) of the water basin is adapted to actuate production units (4) or their parts located at the bottom (P) of the water basin or in close vicinity, and the transfer equipment of the energy of the production units (4) or of the intermediate substance is connected in series or parallel in relation to each other,
the production units (4) being used to transform the kinetic energy of the reciprocating movement of water mass into some other form of energy like electric energy and/or kinetic energy and/or pressure of the intermediate agent,
**characterized in that**
- the production units (4) are attached directly or indirectly to the bottom (P) of the water basin at intermediate water region (B;) (in area b of figure 3), to a depth deeper than the wave breaking line, roughly in an area where the ratio of the depth of the water basin H to the wavelength L, is in the range from 1/20-½,
- the production units (4) are totally submerged under water surface.

2. A production installation (1) as defined in claim 1, **characterized in that** the production installation is attached by means of one or more bases (50) to water basin bottom (P).

3. A production installation (1) as defined in claim 2, **characterized in that** some part or all the transfer equipment (2c, 20, 200) of the energy or intermediate substance of the production installation (1) are immovably attached to the bases (50).

4. A production installation (1) as defined in claims 2 - 3, **characterized in that** the bases (50) have the fastening equipment (68) ready for the production units (4) to be attached to them.

5. A production installation (1) as defined in any of the preceding claims, **characterized in that** the energy from the reciprocating movement of a plate-like body (2) or its part in the production units (4) of a production installation (1) can be transformed into kinetic energy and/or pressure of the intermediate substance by means of a piston or torsion pump (6) functionally connected to the plate.

6. A production installation (1) as defined in claim 5, **characterized in that** the liquid or gasiform intermediate substance can be pumped pressurized by a piston or torsion pump (6) to above the water surface or to some other part of the water basin, where it can be used e.g. for the production of compressed air, or of gases, for creating boost pressure, for ornamental water fountains, for impregnating of wood, for aeration of water pools or for separating gasiform substances or it can be used for producing streams of the intermediate liquid substance needed e.g. in the cultivation of sea creatures and water plants or for the ventilation and/or heating and/or cooling of housing or used as such e.g. in irrigation systems, water glides or fire fighting systems.

7. A production installation (1) as defined in claims 1 - 4, **characterized in that** the production units (4) can be used to transform the kinetic energy of the water mass into electric energy and the electric energy can be transferred via wires or cables into the point of application.

8. A production installation (1) as defined in claim 7, **characterized in that** the point of application for the electric energy is an electric line above the water basin surface with which the electric energy can be transferred to some other point of application.

9. A production installation (1) as defined in any of the preceding claims, **characterized in that** the production units (4) are attached to the bottom (P) of the water basin so as to be totally located at a depth where the movement of the mass is substantially reciprocating or elliptic.

## Patentansprüche

1. Produktionsanlage (1) zum Ausnutzen von Wellenenergie, wobei es in dieser Produktionsanlage zwei oder mehr Produktionseinheiten (4) gibt und die Wassermasse (V) des Wasserbeckens geeignet ist, Produktionseinheiten (4) oder ihre Teile zu betätigen, die sich am Boden (P) des Wasserbeckens oder in enger Nähe befinden, und wobei die Übertragungseinrichtung der Energie der Produktionseinheiten (4) oder der Zwischensubstanz in Reihe oder parallel in Bezug aufeinander verbunden ist,
wobei die Produktionseinheiten (4) verwendet werden, um die kinetische Energie der sich hin- und herbewegenden Bewegung der Wassermasse in eine andere Energieform umzuwandeln, wie elektrische Energie und/oder kinetische Energie und/oder Druck des Zwischenmittels,
**dadurch gekennzeichnet, dass** die Produktionseinheiten (4) direkt oder indirekt am Boden (P) des Wasserbeckens an einem Zwischenwasserbereich (B) (im Bereich b von Fig. 3) angebracht sind, in einer Tiefe, die tiefer als die Wellenbruchlinie ist, etwa in einem Bereich, wo das Verhältnis der Tiefe des Wasserbeckens H zur Wellenlänge L in dem Bereich von 1/20-1/2 liegt,
wobei die Produktionseinheiten (4) gänzlich unter der Wasseroberfläche untergetaucht sind.

2. Produktionsanlage (1) nach Anspruch 1, **dadurch gekennzeichnet, dass** die Produktionsanlage mittels einer oder mehrerer Basen (50) am Wasserbeckenboden (P) angebracht ist.

3. Produktionsanlage (1) nach Anspruch 2, **dadurch gekennzeichnet, dass** ein Teil oder alles der Übertragungseinrichtung(2c, 20, 200) der Energie oder Zwischensubstanz der Produktionsanlage (1) unbeweglich an den Basen (50) angebracht sind.

4. Produktionsanlage (1) nach einem der Ansprüche 2 oder 3, **dadurch gekennzeichnet, dass** die Basen (50) eine Befestigungseinrichtung (68) aufweisen, die bereit ist, dass die Produktionseinheiten (4) an ihnen angebracht werden.

5. Produktionsanlage (1) nach einem der vorhergehenden Ansprüche, **dadurch gekennzeichnet, dass** die Energie von der hin- und hergehenden Bewegung eines plattenartigen Körpers (2) oder seinem Teil in den Produktionseinheiten (4) von einer Produktionsanlage (1) in kinetische Energie und/oder Druck der Zwischensubstanz mittels einer Kolben- oder Torsionspumpe (6) umgewandelt werden kann, die funktional mit der Platte verbunden ist.

6. Produktionsanlage (1) nach Anspruch 5, **dadurch gekennzeichnet, dass** die flüssige oder gasförmige Zwischensubstanz unter Druck gesetzt durch eine Kolben- oder Torsionspumpe (6) nach oberhalb der Wasseroberfläche oder zu einem anderen Teil des Wasserbeckens gepumpt werden kann, wo sie z.B. verwendet werden kann für die Produktion von Druckluft, oder von Gasen, zum Erzeugen von Boost-Druck, für Zierwasserspringbrunnen, zur Imprägnierung von Holz, zur Lüftung von Wasserschwimmbecken oder zum Trennen gasförmiger Substanzen, oder sie kann zum Erzeugen von Strömen der flüssigen Zwischensubstanz verwendet werden, die z.B. benötigt werden bei der Kultivierung von Seelebewesen und Wasserpflanzen oder für die Belüftung und/oder das Erwärmen und/oder Kühlen von Unterkünften, oder verwendet werden als solche z.B. in Bewässerungssystemen, Wassergleitern oder Brandbekämpfungssystemen.

7. Produktionsanlage (1) nach einem der Ansprüche 1 bis 4, **dadurch gekennzeichnet, dass** die Produktionseinheiten (4) verwendet werden können, um die kinetische Energie der Wassermasse in elektrische Energie umzuwandeln, und wobei die elektrische Energie über Drähte oder Kabel in den Punkt der Anwendung überführt werden kann.

8. Produktionsanlage (1) nach Anspruch 7, **dadurch gekennzeichnet, dass** der Punkt der Anwendung für die elektrische Energie eine elektrische Leitung oberhalb der Wasserbeckenoberfläche ist, mit der die elektrische Energie an einige andere Punkte der Anwendung überführt werden kann.

9. Produktionsanlage (1) nach einem der vorhergehenden Ansprüche, **dadurch gekennzeichnet, dass** die Produktionseinheiten (4) am Boden (P) des Wasserbeckens angebracht sind, so dass sie sich gänzlich in einer Tiefe befinden, wo die Bewegung der Masse im Wesentlichen hin- und hergehend oder elliptisch ist.

## Revendications

1. Installation de production (1) pour utiliser l'énergie des vagues, installation de production dans laquelle il y a deux unités de production ou plus (4) et la masse d'eau (V) du bassin d'eau est adaptée pour actionner les unités de production (4) ou leurs parties situées au fond (P) du bassin d'eau ou à proximité immédiate, et les équipements de transfert de l'énergie des unités de production (4) ou de la substance intermédiaire sont raccordés selon une relation en série ou en parallèle,
les unités de production (4) étant utilisées pour transformer l'énergie cinétique du mouvement de va-et-vient de la masse d'eau en une certaine autre forme d'énergie comme l'énergie électrique et/ou l'énergie cinétique et/ou la pression de l'agent intermédiaire,
**caractérisée en ce que** :
les unités de production (4) sont fixées directement ou indirectement au fond (P) du bassin d'eau dans une région d'eau intermédiaire (B) ; (dans la zone b de la figure 3), à une profondeur plus profonde que la ligne de rupture des vagues, approximativement dans une zone où le rapport de la profondeur du bassin d'eau H sur la longueur d'onde L, est de l'ordre de 1/20 - 1/2 ,
les unités de production (4) sont totalement immergées sous la surface de l'eau.

2. Installation de production (1) selon la revendication 1, **caractérisée en ce que** l'installation de production (1) est fixée au moyen d'une ou plusieurs embases (50) au fond (P) du bassin d'eau.

3. Installation de production (1) selon la revendication 2, **caractérisée en ce qu'**une certaine partie ou tout l'équipement de transfert (2c, 20, 200) de l'énergie ou de la substance intermédiaire de l'installation de production (1) est fixé de manière immobile aux embases (50).

4. Installation de production (1) selon les revendications 2-3, **caractérisée en ce que** les embases (50) ont l'équipement de fixation (68) prêt pour la fixation des unités de production (4) à elles.

5. Installation de production (1) selon l'une quelconque des revendications précédentes, **caractérisée en ce que** l'énergie provenant du mouvement de va-et-vient d'un corps en forme de plaque (2) ou une de ses parties dans les unités de production (4) d'une installation de- production (1) peut être transformée en énergie cinétique et/ou pression de la substance intermédiaire au moyen d'une pompe à piston ou à torsion (6) raccordée de manière fonctionnelle à la plaque.

6. Installation de production (1) selon la revendication 5, **caractérisée en ce que** la substance intermédiaire sous forme liquide ou gazeuse peut être pompée sous pression par une pompe à piston ou à torsion (6) au-dessus de la surface de l'eau ou dans une autre partie du bassin d'eau, où elle peut être utilisée par exemple pour la production d'air comprimé, ou de gaz, pour créer une pression supplémentaire, pour des fontaines d'eau d'ornement, pour imprégner le bois, pour l'aération des piscines ou pour séparer des substances sous forme de gaz ou elle peut être utilisée pour produire des courants de substance liquide intermédiaire nécessaires par exemple dans la culture des poissons et fruits de mer et des plantes aquatiques ou pour la ventilation et/ou le chauffage et/ou le refroidissement d'une maison ou utilisée dans les systèmes d'irrigation, les toboggans d'eau ou les systèmes anti-incendie.

7. Installation de production (1) selon les revendications 1 à 4, **caractérisée en ce que** les unités de production (4) peuvent être utilisées pour transformer l'énergie cinétique de la masse d'eau en énergie électrique et l'énergie électrique peut être transférée via des fils ou des câbles au point d'application.

8. Installation de production (1) selon la revendication 7, **caractérisée en ce que** le point d'application pour l'énergie électrique est une ligne électrique au-dessus de la surface du bassin d'eau avec laquelle l'énergie électrique peut être transférée à un certain autre point d'application.

9. Installation de production (1) selon l'une quelconque des revendications précédentes, **caractérisée en ce que** les unités de production (4) sont fixées au fond (P) du bassin d'eau de façon à être totalement positionnées à une profondeur où le mouvement de la masse est sensiblement alternatif ou elliptique.
